# EUROPÄISCHE PATENTSCHRIFT

(11) **EP 4 585 538 B1**
(45) Veröffentlichungstag und Bekanntmachung des Hinweises auf die Patenterteilung: **10.12.2025**
(21) Anmeldenummer: 24151189.8
(22) Anmeldetag: 10.01.2024
(51) Int. Cl.: B65G 17/48, B65G 47/38, B65G 19/02

(54) **TASCHE FÜR EINEN TASCHENSORTER, EIN ENTSPRECHENDER TASCHENSORTER SOWIE EIN VERFAHREN FÜR DIE AUTOMATISCHE TASCHENENTLADUNG**
POCKET FOR A POCKET SORTER, CORRESPONDING POCKET SORTER AND METHOD FOR AUTOMATIC POCKET DISCHARGE
SAC POUR UN TRIEUR DE SACS, TRIEUR DE SACS CORRESPONDANT ET PROCÉDÉ DE DÉCHARGEMENT AUTOMATIQUE DE SACS

(43) Veröffentlichungstag der Anmeldung: 16.07.2025
(73) Patentinhaber: BEUMER Group GmbH & Co. KG, 59269 Beckum (DE)
(72) Erfinder: Neumann, Nils, 33378 Rheda-Wiedenbrück (DE); Kirsch, Christopher, 58239 Schwerte (DE)
(74) Vertreter: Novagraaf Group

(56) Entgegenhaltungen:
- EP-A1- 3 521 214
- WO-A1-2022/218477
- WO-A1-2022/263160
- US-A- 5 687 881
- US-A1- 2013 181 007

## Beschreibung

Die Erfindung betrifft eine Tasche für einen Taschensorter, einen entsprechenden Taschensorter sowie ein Verfahren für die automatische Taschenentladung in einem Taschensorter.

Die WO 2022/263160 A1 offenbart den Oberbegriff des unabhängigen Anspruchs 1 und beschreibt eine Tasche für einen Taschensorter, wobei die Tasche einen teilbaren Taschenboden mit zwei Taschenbodenhälften aufweist, die über einen Verriegelungsmechanismus miteinander verbundenen und in einer Freigabeposition des Verriegelungsmechanismus voneinander lösbar sind, wobei der Verriegelungsmechanismus von einem Antrieb zwischen einer Schließposition und der Freigabeposition hin und her verstellbar ist.

Antriebe mit einem thermisch aktivierbaren Formgedächtniselements sind aus der DE 10 2017 106220 B3 und aus der DE 10 2019 211078 A1 bekannt.

Derartige Taschen werden insbesondere für Taschensorter verwendet, bei denen eine automatische Taschenentladung, bei der für die Entladung der Tasche kein Bedienpersonal erfordert, vorgesehen ist. In gängigen Anwendungsfällen weisen die Taschensorter mehrere 10.000 Taschen auf, die jeweils mit einem von einem Antrieb betätigten Verriegelungsmechanismus ausgestattet sein können. Die aus dem Stand der Technik bekannten Taschen haben den Nachteil, dass der Verriegelungsmechanismus mechanisch aufwendig und damit nicht kostengünstig, jedoch störanfällig ausgebildet ist. Aufgrund der hohen Anzahl der Taschen ist jedoch der verlässliche Betrieb des Verriegelungsmechanismus unerlässlich, wobei die Kosten pro Tasche zugleich so gering wie möglich zu halten sind.

Es ist daher die Aufgabe der Erfindung, eine Tasche der eingangs beschriebenen Art derart weiterzuentwickeln, dass sie kostengünstig in der Herstellung und prozesssicher für die automatische Taschenentladung verwendet werden kann.

Diese Aufgabe wird durch eine Tasche mit den Merkmalen des Anspruchs 1 gelöst. Der nebengeordnete Anspruch 13 betrifft einen entsprechenden Taschensorter. Ein Verfahren für die automatische Taschenentladung ist Gegenstand des nebengeordneten Anspruchs 14. Vorteilhafte Ausführungsformen sind jeweils in den abhängigen Ansprüchen beschrieben.

Demgemäß ist bei einer Tasche vorgesehen, dass der Verriegelungsmechanismus ein über eine elektrische Stromversorgung der Tasche mit einem elektrischen Strom beaufschlagbares Formgedächtniselement aufweist. Die Verwendung eines Formgedächtniselements, das die für die Betätigung des Verriegelungsmechanismus erforderliche Kraft bereitstellt, hat den Vorteil, dass es über mehrere 1000 Verschlusszyklen im wesentlichen verschleißfrei und damit prozesssicher betrieben werden kann.

Das Formgedächtniselement kann im Wesentlichen stabförmig oder drahtförmig ausgebildet sein, insbesondere eine Länge aufweisen, die um ein Vielfaches größer, beispielsweise mindestens zehnmal so groß, vorzugsweise mindestens hundertmal so groß, wie jede weitere Abmessung, etwa eine Breite, oder ein Durchmesser, oder eine Dicke des Formgedächtniselements ist. Beispielsweise kann das Formgedächtniselement einen Draht aufweisen oder als ein elektrisch leitfähiger Draht ausgebildet sein, der eine Formgedächtnislegierung aufweist. Insbesondere kann das Formgedächtniselement als eine Feder aus einem elektrisch leitfähigen Draht einer Formgedächtnislegierung ausgebildet sein, beispielsweise als eine Spiralfeder oder eine Schraubenfeder.

Das Formgedächtniselement kann dazu eingerichtet sein, bei Beaufschlagung des Formgedächtniselements mit einem elektrischen Strom über die elektrische Stromversorgung der Tasche eine Kontraktion oder eine Vergrößerung, insbesondere eine Längenkontraktion oder eine Verlängerung, zu erfahren. Im Zuge der Kontraktion oder Vergrößerung kann das Formgedächtniselement eine Kraft auf mindestens eine Sperrklinke des Verriegelungsmechanismus ausüben, welche dazu eingerichtet sein kann, aus einer Ausnehmung des Taschenbodens herausgezogen zu werden, wenn der Verriegelungsmechanismus von dem Formgedächtniselement in die Freigabeposition überführt wird.

Das Formgedächtniselement kann eine Formgedächtnislegierung, beispielsweise Nitinol aufweisen oder daraus bestehen. Das Formgedächtniselement kann ein Aktor oder Bestandteil eines Aktors sein. Das Formgedächtniselement kann demgemäß als ein Formgedächtnisaktor ausgebildet sein. Der Aktor kann ein linearer Aktor sein. Der Aktor kann beispielsweise einen Nennkraft von 5 N aufweisen. Der Aktor kann einen Überlastschutz aufweisen, der beispielsweise dem ein- bis zweifachen der Nennkraft entspricht.

Ein solcher geeigneter Formgedächtnisaktor kann eine Kombination von MSM(Magnetosensitive Materials)- und SMA(Shape Memory Alloy)-Materialien aufweisen. Diese Kombination ermöglicht es dem Aktor, verschiedene Positionen passiv durch die Haltekraft des MSM-Materials zu halten. Der Aktor arbeitet mit minimalem mechanischem Verschleiß und erzeugt in jeder Position eine passive Haltekraft, wodurch er sehr energieeffizient ist.

Der Aktor kann beispielsweise zwei SMA-Drähte und ein MSM-Element aufweisen. Das MSM-Element kann das passive Halten der Position ermöglichen, während die SMA-Elemente antagonistisch arbeiten, um Zug- oder Druckkräfte zu erzeugen. Um eine Bewegung einzuleiten, müssen die SMA-Elemente die Eigenhaltekraft des MSM-Elements überwinden. Übersteigt eine äußere Kraft die innere Haltekraft des MSM-Elements, verformt es sich und dient als Überlastungsschutz.

Für die Aufnahme hoher Kräfte in einer primären Belastungsrichtung kann der Aktor durch zusätzliche Komponenten wie Federn oder ein Magnetfeld (z.B. einen Permanentmagneten) unterstützt sein.

Alternativ kann ein Aktor auch aus einem einzigen SMA- und MSM-Element bestehen. In diesem Fall sind für die Aktivierung eine Temperaturregelung und ein steuerbares Magnetfeld erforderlich, wobei das MSM als aktive Komponente oder Rückstellelement fungiert.

Die Ausführbarkeit der Erfindung ist jedoch nicht auf die zuvor beschriebenen Aktoren mir mehrteiligen Formgedächtniselementen beschränkt. Insbesondere kann das Formgedächtniselement bei einer Ausführungsform lediglich einen einzigen Draht einer Formgedächtnislegierung aufweisen bzw. daraus bestehen. Auf MSM-Elemente kann gänzlich verzichtet werden, da deren Haltefunktion für die Ausführung der Erfindung nicht zwingend ist.

Der Taschenboden kann eine erste und eine zweite Taschenbodenhälfte aufweisen, wobei an jeder der beiden Taschenbodenhälften eine von zwei gegenüberliegenden Seitenwänden der Tasche befestigt ist. Durch das Trennen der beiden Taschenbodenhälften im Zuge der Überführung des Verriegelungsmechanismus von der Schließposition in die Freigabeposition, können sich die beiden Taschenbodenhälften voneinander trennen und die Tasche bodenseitig öffnen, sodass ein in der Tasche aufgenommenes Transportgut schwerkraftgetrieben aus der Tasche herausfallen kann. Die Taschenbodenwände können insbesondere aus einem flexiblen Material, beispielsweise aus einem Textil gefertigt sein. Dies ermöglicht es, dass nach der Entladung der Tasche die beiden gegenüberliegenden Seitenwände der Tasche aufeinander zur Anlage kommen oder sich zumindest bis auf einen minimalen Abstand einander annähern, sodass die beiden Taschenbodenhälften miteinander in Berührung kommen und der Verriegelungsmechanismus die beiden Taschenbodenhälften aneinander verriegeln kann, indem er von dem Formgedächtniselement aus der Freigabeposition in die Schließposition überführt wird. Diese Überführung kann dadurch erfolgen, dass die Stromversorgung des Formgedächtniselements unterbrochen wird. Dies hat zur Folge, dass die zuvor beschriebene Abmessungsveränderung, insbesondere Längenveränderung des Formgedächtniselements, beispielsweise eine Längenvergrößerung oder eine Verringerung der Länge des Formgedächtniselements, eine Sperrklinke antreibt, in eine Ausnehmung des Taschenbodens, insbesondere einer der beiden Taschenbodenhälften, einzutreten und damit die beiden Taschenbodenhälften aneinander festzulegen.

Für das Wiederverschließen der beiden voneinander getrennten Taschenbodenhälften nach der Taschenentladung kann vorgesehen sein, dass mehrere Taschen, beispielsweise ein Taschenbatch, der über eine Taschenentladung hinweg geführt und zumindest eine der Taschen des Batch an der Taschenentladung entladen wurde, im Anschluss an die Taschenentladung in Förderrichtung gestaut werden, sodass die Seitenwände der gestauten Taschen aneinander gedrückt und damit die Taschenbodenhälften zusammengeführt werden. Wenn daraufhin das Formgedächtniselement aufgrund der unterbrochenen Stromzufuhr relaxiert und der Verriegelungsmechanismus von der Offenstellung in die Schließstellung überführt wird, können die beiden Taschenbodenhälften der Tasche wieder miteinander verbunden, insbesondere aneinander verriegelt werden.

Bevorzugt weist eine der beiden Taschenbodenhälften die zuvor beschriebene Aktorik, insbesondere das Formgedächtniselement und mindestens eine davon angetriebene Sperrklinke auf. Die andere Taschenbodenhälfte kann mindestens eine Ausnehmung zur Aufnahme der Sperrklinke aufweisen, wenn der Verriegelungsmechanismus in der Schließposition angeordnet ist. Im Übrigen kann die andere Taschenbodenhälfte frei von Bestandteilen, insbesondere frei von beweglichen Teilen, des Verriegelungsmechanismus sein. Es kann somit vorgesehen sein, dass bis auf die Ausnehmung sämtliche Bestandteile des Verriegelungsmechanismus auf eine der beiden Taschenbodenhälften beschränkt sind.

Der Verriegelungsmechanismus kann zumindest teilweise in einem Hohlraum in einer der beiden Taschenbodenhälften aufgenommen sein. Vorzugsweise kann das Formgedächtniselement, insbesondere ein Draht aus einer Formgedächtnislegierung zumindest über wesentliche Teile seiner Länge im Wesentlichen berührungsfrei zu weiteren strukturellen Komponenten der Taschenbodenhälfte durch den Hohlraum geführt sein. Die Berührungsfreiheit ermöglicht eine geringe Reaktionszeit des Formgedächtniselements, indem bei der Erwärmung die Wärmeübertragung an angrenzende Bestandteile des Taschenbodens vermieden werden. Darüber hinaus ermöglicht der Hohlraum eine Umströmung des Formgedächtniselements, wenn die Stromversorgung unterbrochen und das Formgedächtniselement zur Relaxation abkühlen soll. Vorzugsweise ist der Hohlraum, durch welchen das Formgedächtniselement hindurchgeführt wird an einer Seite der Taschenbodenhälfte, welche das Formgedächtniselement aufweist und in dem Hohlraum aufnimmt, offen, wenn die beiden Taschenbodenhälften in der Freigabestellung des Verriegelungsmechanismus voneinander getrennt sind, und von der gegenüberliegenden Taschenbodenhälfte verschlossen, wenn die beiden Taschenbodenhälften in der Schließposition aneinander festgelegt sind. Dies ermöglicht, dass in der Schließposition die Luftumströmung des Formgedächtniselements unterbunden und damit bei Strombeaufschlagung eine unnötige Wärmedissipation vermieden wird.

Die erste und die zweite Taschenbodenhälfte können Hilfsmittel für die Vereinigung der beiden Taschenbodenhälften nach der Entleerung der Tasche aufweisen, damit die beiden Taschenbodenhälften, etwa nach einer Unterbrechung der Stromversorgung des Formgedächtniselements, insbesondere des Formgedächtniselements, wieder aneinander festgelegt werden können, indem der Verriegelungsmechanismus aus der Freigabeposition in die Schließposition überführt wird. Die Hilfsmittel können mindestens ein paar sich einander magnetisch anziehender Elemente, beispielsweise einen Dauermagnet und ein von dem Dauermagnet magnetisierbares Metall oder ein paar entgegengesetzt gepoltert Dauermagnete aufweisen. Der Dauermagnet kann an einer ersten der beiden Taschenbodenhälften und das magnetisierbare Metall bzw. der entgegengesetzt gepolte Magnet in einer zweiten der beiden Taschenbodenhälften angeordnet sein. Mindestens eines von Dauermagnet und magnetisierbarem Metall/ entgegengesetzt gepoltem Magnet kann von dem Verriegelungsmechanismus angetrieben sein, derart, dass der Dauermagnet und das magnetisierbare Metall bzw. Der entgegengesetzt gepolte Magnet in der Schließposition weiter einander angenähert sind als in der Freigabeposition.

Die beiden Taschenbodenhälften können plattenförmig oder stabförmig ausgebildet sein. Das Formgedächtniselement, insbesondere ein elektrisch leitfähiger Draht aus einer Formgedächtnislegierungen, kann sich im Innern und zumindest abschnittsweise, vorzugsweise über seine gesamte Länge, parallel zu einer der beiden Taschenbodenhälften erstrecken. Wenn das Formgedächtniselement als eine Feder aus einem elektrisch leitfähigen Draht einer Formgedächtnislegierung ausgebildet ist, beispielsweise als eine Spiralfeder oder eine Schraubenfeder, kann sich das Formgedächtniselement mit seiner Symmetrieachse, insbesondere mit seiner Längsachse zumindest abschnittsweise parallel zu einer der beiden Taschenbodenhälften erstrecken. Das Formgedächtniselement, insbesondere ein elektrisch leitfähiger Draht dieses, beispielsweise eine Spiralfeder oder eine Schraubenfeder aus dem elektrisch leitfähigen Draht einer Formgedächtnislegierung, kann elektrisch und/oder thermisch isoliert sein. Die Isolierung kann beispielsweise als ein Lack auf den Draht aufgebracht sein. Die Isolierung kann so konditioniert sein, dass sie trotz ihrer isolierenden Eigenschaften noch eine ausreichende Beweglichkeit des Formgedächtniselements gewährleistet.

Das Formgedächtniselement, insbesondere ein elektrisch leitfähiger Draht aus einer Formgedächtnislegierung, kann freiliegend im Innern eines Hohlraums der Taschenbodenhälfte angeordnet sein. Der Hohlraum kann an einer Verbindungsseite, über welche die Taschenbodenhälfte an der anderen Taschenbodenhälfte anliegt, wenn die Taschenbodenhälften miteinander verbunden sind, offen sein, wenn die Taschenbodenhälften voneinander gelöst sind.

Der Verriegelungsmechanismus kann in die Schließposition vorgespannt sein. Die Vorspannung kann mithilfe eines Federelements bereitgestellt sein, beispielsweise mit einer Spiralfeder. Das Federelement kann auf eine Sperrklinke wirken, welche mithilfe des Verriegelungsmechanismus zwischen einer ausgefahrenen Position und einer eingezogenen Position hin und her bewegbar ist. Die Sperrklinke kann an einem um eine Drehachse schwenkbaren Hebel ausgebildet sein. Das Formgedächtniselement kann dazu eingerichtet sein, den Hebel um die Drehachse zu schwenken und damit die Sperrklinke zumindest in einer der beiden Bewegungsrichtungen zwischen der ausgefahrenen Position und der eingezogenen Position anzutreiben. Die Gegenrichtung der Bewegung der Sperrklinke kann von einem in die entgegengesetzte Richtung wirkenden Federelement bereitgestellt sein. Das Federelement kann das Federelement sein, welches die zuvor beschriebene Vorspannung in die Schließposition bereitstellt.

Das Federelement und das Formgedächtniselement können in entgegengesetzte Richtungen wirkende Federelemente sein, wobei das Formgedächtniselement eine einstellbare Federkonstante aufweist, abhängig von der Strombeaufschlagung. Insbesondere können das Federelement und das Formgedächtniselement entgegengesetzte Drehmomente auf den Hebel ausüben. Während das Federelement, beides Weise eine Spiralfeder, eine unveränderliche Feder Kennlinie aufweist, kann die von dem Formgedächtniselement ausgeübte Federkraft Abhängig von der Strombeaufschlagung einstellbar sein.

Das Formgedächtniselement kann als Zugfeder oder als Druckfeder ausgebildet sein. Dasselbe gilt für das Federelement. Demgemäß können das Formgedächtniselement und das Federelement im Sinne einer kinematischen Umkehr bei Ausführungsformen der Erfindung miteinander vertauscht werden.

In der Schließposition des Verriegelungsmechanismus kann die Sperrklinke die ausgefahrenen Position einnehmen, während sie in der Freigabeposition des Verriegelungsmechanismus die eingefahrene Position einnimmt. Damit der Verriegelungsmechanismus die Freigabeposition einnimmt, kann vorgesehen sein, dass das Formgedächtniselement über die Stromversorgung mit einem elektrischen Strom beaufschlagt wird, worauf hin das Formgedächtniselement seine Länge ändert, insbesondere kontrahiert oder relaxiert, und dadurch den Hebel um die Drehachse derart verschwenkt, dass die Sperrklinke von der ausgefahrenen Position in die eingezogene Position überführt wird. Demgemäß kann der Verriegelungsmechanismus beispielsweise mindestens einen um eine Drehachse schwenkbaren Hebel aufweisen, an dem in Längsrichtung des Hebels beabstandet zueinander das Formgedächtniselement und eine Sperrklinke angeordnet sind. Vorzugsweise kann der Verriegelungsmechanismus an gegenüberliegenden Seiten einer der Taschenbodenhälften, vorzugsweise an gegenüberliegenden Stirnseiten, jeweils einen um eine Drehachse schwenkbaren Hebel aufweisen. In Längsrichtung des Hebels beabstandet zueinander können das Formgedächtniselement einerseits (oder für beide Hebel separate Formgedächtniselemente) und eine Sperrklinke andererseits angeordnet sein.

Die Sperrklinke kann sich somit bei einer Ausführungsform über eine von zwei gegenüberliegenden Stirnseiten einer der beiden Taschenbodenhälften aus der Taschenbodenhälfte heraus erstrecken, wenn der Verriegelungsmechanismus die Schließposition einnimmt. Dabei kann sich vorzugsweise das Formgedächtniselement, insbesondere ein elektrisch leitfähiger Draht aus einer Formgedächtnislegierung, zumindest abschnittsweise und vorzugsweise über seine gesamte Länge unter einem Winkel, vorzugsweise senkrecht, zu der Stirnseite erstrecken.

Vorzugsweise ist an jeder der beiden gegenüberliegenden Stirnseiten eine Sperrklinke des Verriegelungsmechanismus ausgebildet. Die beiden Sperrklinken können mit jeweils einem Formgedächtniselement oder mit demselben Formgedächtniselement angetrieben sein.

Zur Erhöhung der wirksamen Länge kann das Formgedächtniselement, insbesondere ein elektrisch leitfähiger Draht aus einer Formgedächtnislegierung, mindestens eine Umlenkung aufweisen, beispielsweise eine 180°-Umlenkung, sodass das Formgedächtniselement, insbesondere der Draht zumindest abschnittsweise in parallelen Bahnen geführt ist.

Der Verriegelungsmechanismus kann demgemäß ein Federelement aufweisen, mit dem der Verriegelungsmechanismus in die Schließposition vorgespannt ist. Das Formgedächtniselement kann dazu eingerichtet sein, abhängig von einer Strombeaufschlagung den Verriegelungsmechanismus entgegen einer Vorspannung des Federelements in die Freigabeposition zu überführen.

Um der Tasche elektrische Energie zuzuführen kann sie mindestens einen elektrischen Kontakt, vorzugsweise mindestens einen Gleitkontakt, für den Anschluss einer Stromquelle, beispielsweise einer Gleichstromquelle, an die elektrische Stromversorgung aufweisen. Bei dieser Ausführungsform kann es vorgesehen sein, dass die Tasche lediglich zum Zeitpunkt des Entladevorgangs mit elektrischer Energie versorgt und im Übrigen stromfrei ist. Es ist somit kein gesonderter Steuer- und Regelmechanismus für die Ansteuerung des Verriegelungsmechanismus erforderlich. Auch ist kein Energiespeicher, beispielsweise ein elektrochemischer Energiespeicher, erforderlich, der in der Tasche untergebracht werden müsste.

Darüber hinaus ist es vorteilhaft, wenn die Tasche entlang der Förderstrecke des Taschensorters stromfrei ist und nur für den eigentlichen Entladevorgang mit elektrischer Energie versorgt wird. Der elektrische Kontakt kann in einem oberen Bereich der Tasche bereitgestellt sein. Der elektrische Kontakt kann insbesondere an einem in eine Förderschiene der Förderstrecke eingehängten Mitnehmer ausgebildet sein, in welchen die Tasche eingehängt und entlang der Förderstrecke angetrieben ist. Die elektrische Stromversorgung kann insbesondere eine Stromleitung zwischen dem elektrischen Kontakt und dem Verriegelungsmechanismus, insbesondere dem Formgedächtniselement, bereitstellen. Die Stromleitung kann als ein flexibles, vorzugsweise mehradrige elektrisches Kabel ausgeführt sein.

An einer Taschenentladung entlang einer Förderstrecke des Taschensorters kann eine Stromquelle, etwa eine Gleichstromquelle, bereitgestellt sein, welche an einer bestimmten Entladeposition mit dem elektrischen Kontakt, beispielsweise einem Gleitkontakt der Tasche in Berührung kommt und die Stromversorgung der Tasche mit elektrischer Energie beaufschlagt. Die Stromquelle kann einen zu dem Kontakt der Tasche komplementären Kontakt, beispielsweise einen gleichartigen oder komplementären Gleitkontakt aufweisen. Die Toleranz der Entladeposition ergibt sich gerade aus der Kontaktstrecke der komplementären Kontakte, wenn diese bei dem Transport der Tasche entlang der Taschenentladung miteinander in Kontakt treten. Wenn die Kontaktstrecke klein gehalten wird, indem die Abmessungen der komplementären Kontakte in der Förderrichtung der Tasche geringgehalten werden, kann eine geringe Toleranz der Entladeposition eingehalten werden. Dies ermöglicht es, dass die Tasche für den Entladevorgang nicht verlangsamt oder gar angehalten werden muss. Vielmehr kann die Tasche mit unveränderter Geschwindigkeit entlang der Förderstrecke an der Taschenentladung vorbeigeführt und entladen werden. Durch geeignete Auslegung des Hebels sowie der effektiven Länge des Formgedächtniselements, insbesondere des elektrisch leitfähigen Drahts aus einer Formgedächtnislegierung können sehr kurze Reaktionszeiten des Formgedächtniselements erreicht und damit die erforderliche Dauer der Strombeaufschlagung gering gehalten werden.

Die Stromversorgung kann mindestens einen elektrischen Leiter, etwa ein elektrisches Kabel, aufweisen, mit dem das Formgedächtniselement an den mindestens einen elektrischen Kontakt angeschlossen ist.

Die Stromzufuhr der elektrischen Stromversorgung kann alternativ kontaktfrei ausgeführt werden. Dazu kann die elektrische Stromversorgung mindestens einen Empfänger einer drahtlosen, vorzugsweise einer induktiven Energieübertragung aufweisen, von dem die Stromversorgung mit elektrischer Energie versorgt ist. Die Taschenentladung kann einen Sender einer drahtlosen, vorzugsweise einer induktiven Energieübertragung aufweisen. Analog zu den zuvor beschriebenen, komplementären elektrischen Kontakten von Tasche und Taschenentladung kann auch bei einer kontaktfrei ausgeführten Stromzufuhr, beispielsweise durch geeignete Abschirmung des Senders der drahtlosen Energieübertragung, eine sehr hohe Präzision hinsichtlich der Entladeposition erreicht werden.

Ein Taschensorter kann eine Vielzahl Taschen der zuvor beschriebenen Art aufweisen, wobei der Taschensorter einen Hängeförderer mit einer Vielzahl Mitnehmer aufweist, die entlang einer Förderschiene des Hängeförderers gefördert sind und in die jeweils eine der Vielzahl Taschen eingehängt ist.

Gemäß einem anderen Aspekt der Erfindung wird ein Verfahren für die automatische Taschenentladung in einem Taschensorter beschrieben, wobei das Verfahren die Schritte aufweist:
a. Fördern mindestens einer Tasche der zuvor beschriebenen Art, vorzugsweise einer Mehrzahl dieser Taschen, besonders bevorzugt eines Batch aus einer bestimmten Anzahl dieser Taschen, entlang einer Förderstrecke eines Taschensorters;
b. Zuführen der Tasche einer Taschenentladung des Taschensorters entlang der Förderstrecke, wobei der Verriegelungsmechanismus an der Taschenentladung angesteuert wird, die Freigabeposition einzunehmen, indem das Formgedächtniselement von der Taschenentladung über die Stromversorgung mit einem elektrischen Strom beaufschlagt wird.

Das Beaufschlagen kann das Erwärmen des Formgedächtniselements aufweisen, wobei sich eine Länge des Formgedächtniselements, vorzugsweise eine Drahtlänge eines elektrisch leitfähigen Drahts aus einer Formgedächtnislegierung, verkürzt oder verlängert.

Das Ansteuern des Verriegelungsmechanismus kann das Herstellen eines elektrischen Kontakts zwischen einer Stromquelle der Taschenentladung, vorzugsweise einer Gleichstromquelle, und der elektrischen Stromversorgung der Tasche aufweisen.

Das Herstellen eines elektrischen Kontakts kann das aneinander Vorbeiführen korrespondierender Gleitkontakte an der Tasche und der Taschenentladung aufweisen, wobei der elektrische Kontakt für eine Kontaktzeit, während der die aneinander vorbeigeführten korrespondierenden Gleitkontakte elektrisch leitend in Verbindung stehen, hergestellt wird. Die Strombeaufschlagung über die kontaktierten Kontakte kann davon abhängen, dass eine Systemsteuerung für die kontaktierten korrespondierenden elektrischen Kontakte einen elektrischen Strom freigibt, sodass die Tasche geöffnet wird. Diese Ausführungsform ist insbesondere dann zweckmäßig, wenn statt einer einzelnen Tasche eine Mehrzahl Taschen, beispielsweise ein Taschenbatch aus mehreren Taschen, der Taschenentladung zugeführt wird, die mit korrespondierenden elektrischen Kontakten der Taschenentladung, gleichzeitig oder zeitversetzt, in Kontakt treten, jedoch nur eine einzelne oder einige, jedoch insbesondere nicht sämtliche Taschen, wahlweise aber auch sämtliche Taschen, entleert werden sollen, mithin nur bestimmte Taschen Über die korrespondierenden Kontakte von Tasche und Taschenentladung mit einem elektrischen Strom beaufschlagt werden sollen.

Die Tasche kann mit einer kontinuierlichen Bewegung, vorzugsweise in einer gleichförmigen Bewegung, durch die Taschenentladung hindurch transportiert werden, besonders bevorzugt mit derselben Fördergeschwindigkeit, mit welcher die Tasche entlang einer stromaufwärtigen und einer stromabwärtigen Förderstrecke der Taschenentladung gefördert wird.

Die beiden Taschenbodenhälften können, nachdem der Verriegelungsmechanismus in der Taschenentladung die Freigabeposition eingenommen hat, voneinander getrennt werden. Dabei kann das Formgedächtniselement zur Umgebung freigelegt werden. Alternativ oder zusätzlich kann ein Tunnel oder ein Kanal in der das Formgedächtniselement aufweisenden Taschenbodenhälfte vorgesehen sein, in dem bzw. der das Formgedächtniselement aufgenommen ist. Dadurch wird das Risiko einer Beschädigung des Verriegelungsmechanismus, insbesondere des Formgedächtniselements, verringert. Vorzugsweise ist das Formgedächtniselement berührungssicher und nicht einsehbar in der Taschenbodenhälfte aufgenommen.

Die Tasche kann durch das Trennen der Taschenbodenhälften entleert und die entleerte Tasche entlang der Förderstrecke aus der Taschenentladung herausgeführt werden. Dabei kann die Strombeaufschlagung des Formgedächtniselements unterbrochen werden, sodass das Formgedächtniselement relaxiert, insbesondere sich wieder verlängert, und der Verriegelungsmechanismus in die Schließposition überführt wird.

Weitere Einzelheiten der Erfindung werden anhand der nachstehenden Figuren erläutert. Dabei zeigt:
- Figur 1: in schematischer Darstellung einen Hängeförderer gemäß dem Stand der Technik;
- Figur 2: eine beispielhafte Ausführungsform einer erfindungsgemäßen Tasche;
- Figur 3: in schematischer Darstellung einen teilbaren Taschenboden gemäß dem Stand der Technik; und
- Figur 4: in schematischer Darstellung eine Taschenbodenhälfte gemäß einer Ausführungsform der Erfindung.

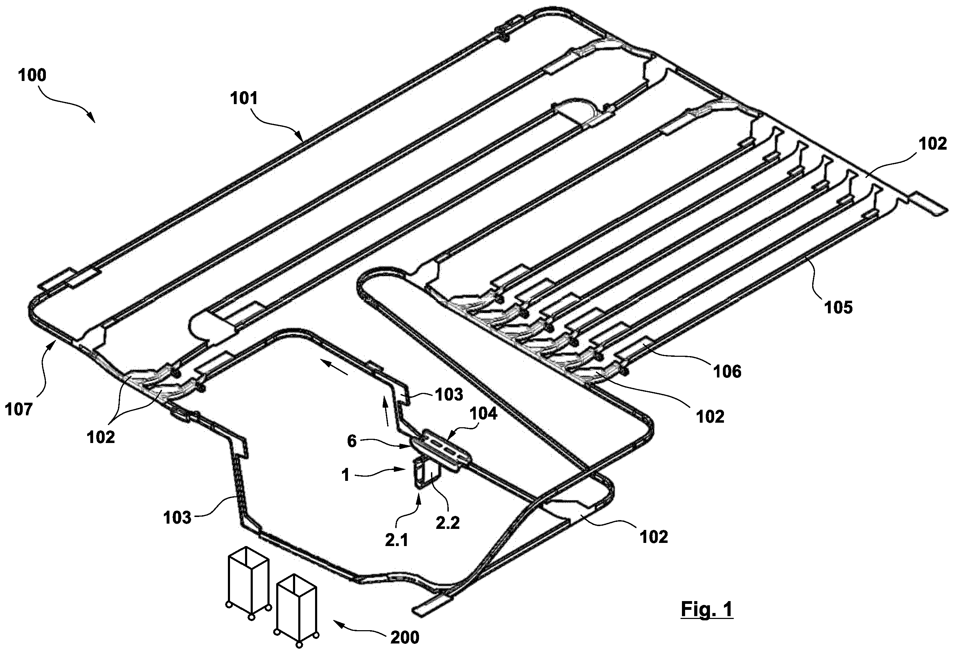

Die Figur 1 zeigt eine beispielhafte Ausführungsform eines Taschensorters mit einem aus dem Stand der Technik bekannten Hängeförderer 100. Mit dem Hängeförderer 100 können beispielsweise aus einem Lager 309, beispielsweise ein Hochregallager, Artikel 320 entnommen und in Taschen 100 des Hängeförderers 100 geladenen werden. Weitere infrage kommende Lager- oder Bereitstellungsarten können beispielsweise durch ein Blocklager, durch Fachbodenregale, Schwerkraftregale, Durchlaufregale, Palettenregale, Kragarmregale, eine Bodenlagerung, Regalbediengeräte, Horizontal-Karussell-Lagerung, Vertikal-Karussell-Lagerung, ein automatisiertes Kleinteilelager, eine Lagercontainer Freilagerung, mobile Regale oder über Shuttle-Systeme realisiert sein. Die Artikel müssen dabei nicht zwangsweise aus einem Lager kommen, sondern können beispielsweise auch aus einer automatischen / manuellen Einschleusung bei der Entladung von Containern / LKW oder auch von einem Sorter kommen. Weiterhin kann die Übergabe der Artikel über eine Schnittstelle mit einem gleich- oder andersartigen Förderer oder Sorter erfolgen. Im Hängeförderer 100 werden die Artikel 320 in einem mehrschrittigen Verfahren sortiert und letzten Endes in einer vorbestimmten Reihenfolge an Packstationen 306 ausgegeben, wo die Einzelartikel 320 entsprechend zu vordefinierten Versandaufträgen verpackt werden. Die Einzelartikel 320 werden dem Lager 309 durch eine Mehrzahl Kommissionierer 308 in Form von entsprechenden Kommissioniereinrichtungen oder in Form von Personal entnommen und die im Zuge dessen entnommenen Einzelartikel 320 jeweils in einem von einer Mehrzahl von Übergabestellen 310 gesammelt und zu einzelnen Auftragsbatches zusammengestellt, welche an den Taschensorter übergeben werden sollen. Über mehrere Beladestationen 303 werden dann die in den Übergabestellen 310 gesammelten Einzelartikel 320 in Taschen 1 des Hängeförderers 100 eingeladen, wobei die Zuordnung jedes Artikels 320 zur jeweiligen Tasche 1 gespeichert wird, solange sich der Artikel 320 auf dem Hängeförderer befindet. Die beladenen Taschen werden anschließend einem dynamischen Batch-Puffer 302 zugeführt, in welchem eine Vorsortierung der Taschen 1 vorgenommen wird. Beispielsweise kann der dynamische Batch-Puffer 302 mehrere Pufferkreise aufweisen, wobei sämtliche Taschen, die als Sortierziel derselben Packstation 306 zugeführt werden sollen, in demselben Pufferkreis vorgehalten werden, bis sie als Gruppe von Taschen mit demselben Sortierziel, etwa auf eine Anforderung hin, aus dem Pufferkreis ausgeschleust werden. Vorzugsweise können in jedem der Pufferkreis mehrere Gruppen von Taschen, die derselben Packstation 306 zugeführt werden sollen bzw. dasselbe Sortierziel aufweisen, aufgenommen, d. h. gepuffert werden. Diese Vorsortierung in dem dynamischen Batch-Puffer 302 kann vollautomatisch anhand mindestens eines Kriteriums erfolgen. Diese Kriterien sind können die Abfahrtzeit, eine Identifikation des Spediteurs, das Gesamtvolumen der Objekte gleichen Versandziels, eine Priorisierung, eine Gewichtsklasse eine Größenklasse und/oder dergleichen betreffen. Dem dynamischen Batch-Puffer 302 ist darüber hinaus ein dynamischer Puffer 301 vorgeschaltet, welcher durch Rückläufer 311 gespeist wird, welche diesem ebenfalls über eine Beladestation 303 zugeführt werden. Es kann vorgesehen sein, dass die Rückläufer 311 dem dynamischen Batch-Puffer 302 priorisiert zugeführt werden, bevor der entsprechende Artikel 320 erneut dem Lager 309 entnommen werden muss. Ferner kann vorgesehen sein, dass jeder der Beladestationen 303 ein separater dynamischer Puffer 301 zugeordnet ist.

Die Separierung der Taschen 1 nach ihren Gruppen bzw. Sortierzielen erfolgt in einer dem dynamischen Batch-Puffer 302 fördertechnisch nachgeschalteten Sortiermatrix 304, in welcher die Taschen 1 zugeführt werden. Der Sortiermatrix 304 werden die mehreren vollständigen Gruppen von Taschen 1 desselben Sortierziels in einer willkürlichen Reihenfolge zugeführt. Die Taschen 1 verlassen die Sortiermatrix 304 nach deren Durchlaufen sortenrein, d. h. als ein kompakter Pulk von Taschen 1, wobei sämtliche einer Gruppe von Taschen 1 mit demselben Sortierziel zugeordnete Taschen 1 unmittelbar aufeinanderfolgend aus der Sortiermatrix 304 ausgeschleust werden. Die Sortiermatrix 304 ist ferner dazu eingerichtet, neben der Sortenreinheit zusätzlich eine Reihenfolge der Taschen 1 innerhalb derselben Gruppe herzustellen, mithin eine Sequenzierung der Taschen 1 zu erzeugen. Diese Sequenzierung kann beispielsweise dazu vorgesehen sein, um eine weitere Sortierstufe zu erreichen. Anschließend werden die sequenzierten Taschen 1 einem den Packstationen 306 vorgelagerten Taschenpuffer 305 zugeführt. Auf Anforderung seitens der Packstationen 306 können dabei Gruppen von sequenzierten Taschen, welche beispielsweise demselben Auftrag angehören, aus dem Taschenpuffer 305 ausgeschleust und der den Auftrag anfordernden Packstation 306 zugeführt werden. In den Packstationen 306 werden dann die Artikel 320 nach und nach den ankommenden Taschen 1 entnommen und wie vom Auftrag vorgesehen verpackt. Die leeren Taschen 1 werden dann in einem Leertaschenpuffer 307 zwischengespeichert und können von dort aus erneut den Beladestationen 303 zugeführt werden.

An einer Taschenentladung 104 können die in den Taschen 1 gehaltenen Artikel manuell, teilautomatisch oder vollautomatisch entnommen werden. Eine vollautomatische Taschenentladung und eine dazu geeignete Tasche sind aus der WO 2022/263160 A1 bekannt.

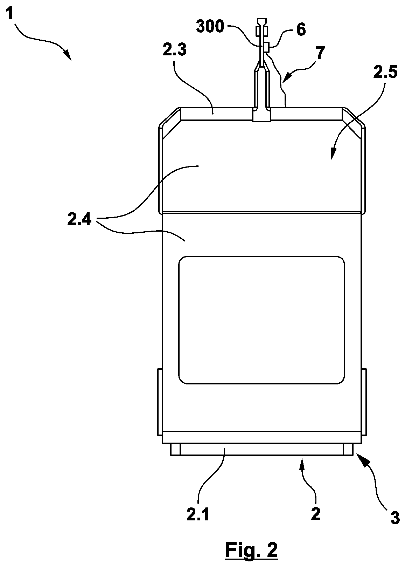

In Figur 2 ist eine beispielhafte Ausführungsform einer Tasche 1 in der Seitenansicht gezeigt, die in einen Mitnehmer 300 eingehängt ist. Über den Mitnehmer 300 kann die Tasche 1 wiederum in eine Förderschiene (101, vgl. Fig. 1) eingehängt sein. Die Tasche 1 weist zwei Taschenwände 2.4 auf, die am unteren Ende zu einem teilbaren Taschenboden 2 miteinander verbunden sind und am oberen Ende durch einen Bügel 2.3 gehalten sind, welcher zum einen eine Beladeöffnung 2.5 bereitstellt und zum anderen zum Aufhängen der Tasche 1 an dem Mitnehmer 300, etwa einem Rollcarrier, zum Bewegen entlang einer Förderschiene eines Hängeförderers aufweist.

Am unteren Ende jeder der Taschenwände 2.4 ist jeweils eine der Taschenbodenhälften 2.1, 2.2 befestigt, welche mittels eines Verriegelungsmechanismus 3 lösbar miteinander verrastet sind.

An dem Mitnehmer 300 ist ein Kontakt 6, beispielsweise ein Gleitkontakt angeordnet, der in einer Taschenentladung (104, vergleiche Figur 1) mit einem komplementären Kontakt in Berührung kommen kann, um die Stromversorgung 7 der Tasche 1 mit elektrischer Energie zu speisen, woraufhin die Verriegelungsmechanik 3 aktiviert, insbesondere ein Formgedächtniselement 5 mit einem elektrischen Strom beaufschlagt wird, um den Verriegelungsmechanismus 3 von einer Schließposition in eine Freigabeposition zu überführen.

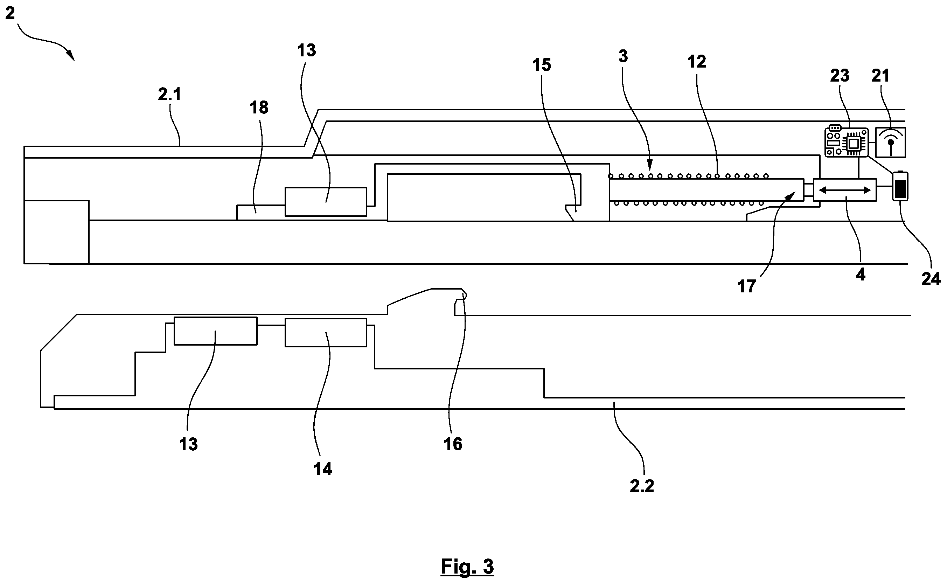

Die Figur 3 zeigt einen teilbaren Taschenboden 2 gemäß dem Stand der Technik, mit zwei Hälften 2.1, 2.2, welche für die ferngesteuerte Entriegelung geeignet ist. Der Taschenboden 2 könnte alternativ auch an einer Tasche 1 der Anordnung gemäß Fig. 2 im Bodenbereich 3 angeordnet sein und die beiden gegenüberliegenden und senkrecht zur Förderrichtung ausgerichteten Taschenwände 2.4 der Tasche 1 miteinander verbinden. Der Verriegelungsmechanismus 3 kann eine mechanische Vorspannung in die Schließposition aufweisen. Dazu ist ein Federelement, hier eine Spiralfeder 12 vorgesehen.

Die Taschenbodenhälften 2.1, 2.2 weisen magnetische Elemente 13, 14 auf. Vorzugsweise sind sämtliche magnetischen Elemente 13, 14 als Permanentmagnete ausgebildet. Insbesondere das Magnetelement 13 kann jedoch auch als ein ferromagnetisches Element ausgebildet sein, etwa ein eisenhaltiges Metall aufweisen. Die Magnete 13,14 weisen eine Polarität auf, gemäß welcher in der Schließposition des Verriegelungselements 3 komplementär gepolte Magnete sich gegenüberstehend angeordnet sind, während in der Freigabeposition gleichgepolte Magnete sich gegenüberstehend angeordnet sind.

In einer Schließposition kann der Magnetschieber 18 mit seinem Betätigungsende 17 um einen maximalen Verstellweg von einem Antrieb 4, etwa einem Stellmotor oder einem Hubmagnet, beabstandet, um welchen das Betätigungsende 17 zwischen der Schließposition und der Freigabeposition verstellbar ist. In der Schließposition greift der Haken 15 des Magnetschieber 18 in die hinterschnittige Hakenaufnahme 16 ein, wobei die hinterschnittige Aufnahme 16 mit einem Vorsprung, welche den von dem Haken 15 hintergriffenen Hinterschnitt bildet, den Haken 15 untergreift und an dem Haken 15 anliegt, sodass die Schließposition der reproduzierbar definiert ist. In der Freigabeposition des Magnetschiebers 18 ist dieser dem Antrieb 4 maximal angenähert, so dass der Haken 15 der ersten Kupplungshälfte 5 und die hinterschnittige Hakenaufnahme 16 der zweiten Kupplungshälfte 6 voneinander beabstandet und außer Eingriff gebracht sind so dass die Hälften 2.1, 2.2 in bzw. entgegen der Förderrichtung voneinander gelöst werden können. Zum Überführen des Magnetschiebers 18 zieht der im gezeigten Beispiel als ziehender Hubmagnet ausgebildete Antrieb 4 den Magnetschieber 18 entgegen der Federkraft der Rückstellfeder 12 aus der Schließposition von der hinterschnittigen Hakenaufnahme 16 weg, bezogen auf die Darstellung nach rechts. Alternativ kann der Antrieb 4 auch als drückender Hubmagnet ausgebildet sein, wobei die Ausrichtung des Hakens 15 und der Hakenaufnahme 16 sowie die Ausrichtung der Magneten 13, 14 entsprechend umgekehrt angeordnet wäre. Zum Ansteuern des Antriebs 4 ist eine Steuereinheit 23 vorgesehen, welche mit einem Empfänger 21 verbunden ist bzw. diesen aufweist. Ferner ist ein elektrischer Energiespeicher 24 wie beispielsweise ein Akku vorgesehen, um die Steuereinheit 23, den Empfänger 21 und den Antrieb 4 mit Energie zu versorgen. Sobald der Empfänger 21 per Funk ein Signal zum Öffnen des Taschenbodens 3 erhält, wird dieses an die Steuereinheit 23 übermittelt, welche daraufhin den Antrieb 4 zum Überführen des Magnetschieber 18 von der Schließposition in die Freigabeposition ansteuert.

Die in Figur 3 gezeigte Verschlussmechanik ist vergleichsweise aufwendig aufgebaut und in der Handhabung störungsanfällig, da die Betriebssicherheit insbesondere von der Zuverlässigkeit der im Taschenboden 2 verbauten Mechanik und Elektronik sowie davon abhängt, dass die drahtlose Ansteuerung des Antriebs 4 zum exakt richtigen Zeitpunkt erfolgt, während sich die Tasche entlang der Förderstrecke mit ihrer Fördergeschwindigkeit bewegt.

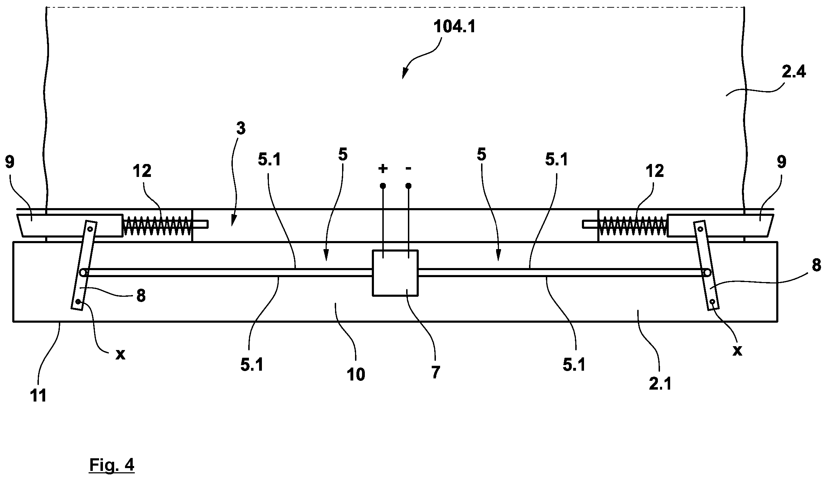

Die in Figur 4 gezeigte Taschenbodenhälfte 2.1 weist den erfindungsgemäßen Verriegelungsmechanismus 3 gemäß einer Ausführungsform auf. Die nicht gezeigte weitere Taschenbodenhälfte 2.2 kann lediglich dazu eingerichtet sein, die Taschenbodenhälfte 2.1, insbesondere die Sperrklinken 9 aufzunehmen, wenn sich der Verriegelungsmechanismus 3 in der Schließposition befindet.

Der Verriegelungsmechanismus 3 weist ein Formgedächtniselement 5 auf, welches vorliegend aus einem Draht 5.1 aus einer Formgedächtnislegierung ausgebildet ist. Der Draht 5.1 ist an einem um eine Drehachse x drehbar gelagerten Hebel 8 um 180° umgelenkt. Der Draht 5.1 endet in einer Stromversorgung 7, an welcher die Drahtenden einerseits festgelegt und andererseits mit elektrischer Energie versorgt sind.

Bei Beaufschlagung des Drahtes 5.1 mit einem elektrischen Strom kann der Draht 5.1 eine Länge verhindern, insbesondere kontrahieren. Wenn die Stromversorgung 7 unterbrochen wird, kann der Draht 5.1 relaxierten. Mit einer Spiralfeder 12 ist die Sperrklinke 9, welche ebenfalls an dem Hebel 8 angehängt ist, in die Schließposition vorgespannt.

Der Verriegelungsmechanismus 3 ist in Figur 4 in der Freigabeposition gezeigt, d. h. bei aktivierter Stromversorgung 7 und demgemäß kontrolliertem Formgedächtniselement 5 bzw. Draht 5.1. Demgemäß befindet sich die Sperrklinke 9 in einer zurückgezogenen Position. Würde nun die Stromversorgung 7 unterbrochen, würde das Formgedächtniselement relaxierten und die Sperrklinke 9 aufgrund der Federvorspannung 12 aus dem Gehäuse der Taschenbodenhälfte 2.1 heraustreten und könnte in einer Ausnehmung (nicht dargestellt) der 2. Taschenbodenhälfte 2.2 eintreten, um die beiden Taschenbodenhälften 2.1,2.2 aneinander festzulegen.

Das Formgedächtniselement 5 kann als Zugfeder oder als Druckfeder ausgebildet sein. Dasselbe gilt für das Federelement 12. Demgemäß können das Formgedächtniselement 5 und das Federelement 12 im Sinne einer kinematischen Umkehr bei Ausführungsformen der Erfindung miteinander vertauscht werden.

Der Draht 5.1 ist in der Taschenbodenhälfte 2.1 im wesentlichen freiliegend geführt, insbesondere in einem Hohlraum ziehen, indem der Draht 5.1 bei geöffnetem Taschenboden 2 von Umgebungsluft umströmt werden zu können, wodurch der Redaktionsprozess nach der Unterbrechung der Stromversorgung beschleunigt wird und damit die Wiederverbindung der beiden Taschenbodenhälften nach dem Entladen der Tasche 1 beschleunigt wird. Alternativ kann das Formgedächtniselement eine thermische Isolierung aufweisen, welche dazu eingerichtet ist, die Wärmedissipation zu verringern, sodass nach der Unterbrechung der Strombeaufschlagung die Zurückführung des Sperrglied von der Freigabeposition in die Schließposition verlangsamt wird.

### Bezugszeichenliste:

- 1: Tasche
- 2: Taschenboden
- 2.1: erste Taschenbodenhälfte
- 2.2: zweite Taschenbodenhälfte
- 2.3: Rahmen
- 2.4: Seitenwand
- 2.5: Öffnung
- 3: Verriegelungsmechanismus
- 4: Antrieb
- 5: Formgedächtniselement
- 5.1: Draht
- 6: Kontakt
- 7: Stromversorgung
- 8: Hebel
- 9: Sperrklinke
- 10: Hohlraum
- 11: Verbindungsseite
- 12: Federelement
- 13: Permanentmagnet
- 14: magnetisierbares Metall
- 15: Haken
- 16: Hakenaufnahme
- 17: Betätigungsende Magnetschieber
- 18: Magnetschieber
- 21: Empfänger
- 23: Steuereinheit
- 24: Energiespeicher
- 100: Hängeförderer
- 101: Förderschiene
- 102: Weiche
- 103: Steigförderer
- 104: Taschenentladung
- 105: Sortiermatrix
- 106: Ausschleusung
- 200: Rollcontainer
- 300: Mitnehmer

## Patentansprüche

1. Tasche (1) für einen Taschensorter, wobei die Tasche (1) einen teilbaren Taschenboden (2) mit zwei Taschenbodenhälften (2.1, 2.2) aufweist, die über einen Verriegelungsmechanismus (3) miteinander verbundenen und in einer Freigabeposition des Verriegelungsmechanismus (3) voneinander lösbar sind, wobei der Verriegelungsmechanismus (3) zwischen einer Schließposition und der Freigabeposition hin und her verstellbar ist, **dadurch gekennzeichnet, dass** der Verriegelungsmechanismus (3) ein über eine elektrische Stromversorgung (7) der Tasche (1) mit einem elektrischen Strom beaufschlagbares Formgedächtniselement (5, 12) aufweist.

2. Tasche (1) nach Anspruch 1, bei der der Verriegelungsmechanismus (3) ein Federelement (5, 12) aufweist, mit dem der Verriegelungsmechanismus (3) in die Schließposition vorgespannt ist, wobei das Formgedächtniselement (5, 12) dazu eingerichtet ist, abhängig von seiner Strombeaufschlagung den Verriegelungsmechanismus (3) entgegen einer Vorspannung des Federelements (5, 12) in die Freigabeposition zu überführen.

3. Tasche (1) nach Anspruch 1 oder 2, die mindestens einen elektrischen Kontakt (6), vorzugsweise mindestens einen Gleitkontakt, für den Anschluss einer Stromquelle, vorzugsweise einer Gleichstromquelle, an die elektrische Stromversorgung (7) aufweist.

4. Tasche (1) nach Anspruch 3, bei der die Stromversorgung (7) mindestens einen elektrischen Leiter, etwa ein elektrisches Kabel, aufweist, mit dem das Formgedächtniselement (5, 12) an den mindestens einen elektrischen Kontakt (6) angeschlossen ist.

5. Tasche (1) nach einem der vorangegangenen Ansprüche, bei der die elektrische Stromversorgung (7) mindestens einen Empfänger einer drahtlosen, vorzugsweise einer induktiven, Energieübertragung aufweist, von dem die Stromversorgung (7) mit elektrischer Energie versorgt ist.

6. Tasche (1) nach einem der vorangegangenen Ansprüche, bei der der Verriegelungsmechanismus (3) an gegenüberliegenden Seiten einer der Taschenbodenhälften (2.1, 2.2), vorzugsweise an gegenüberliegenden Stirnseiten, jeweils eine Sperrklinke (9) aufweist, an der das Formgedächtniselement (5, 12), oder für die beiden Sperrklinken (9) separate Formgedächtniselement (5, 12) des Verriegelungsmechanismus (3), angeordnet sind.

7. Tasche (1) nach einem der vorangegangenen Ansprüche, bei der der Verriegelungsmechanismus (3) mindestens einen um eine Drehachse (x) schwenkbaren Hebel (8) aufweist, an dem in Längsrichtung des Hebels (8) beabstandet zueinander das Formgedächtniselement (5, 12) und eine Sperrklinke (9) angeordnet sind.

8. Tasche (1) nach Anspruch 7, bei der der Verriegelungsmechanismus (3) an gegenüberliegenden Seiten einer der Taschenbodenhälften (2.1, 2.2), vorzugsweise an gegenüberliegenden Stirnseiten, jeweils einen um eine Drehachse (x) schwenkbaren Hebel (8) aufweist, an dem in Radialrichtung zur Drehachse (x) beabstandet zueinander das Formgedächtniselement (5, 12), oder für die beiden Hebel (8) separate Formgedächtniselement (5, 12) des Verriegelungsmechanismus (3), und eine Sperrklinke (9) angeordnet sind.

9. Tasche (1) nach einem der vorangegangenen Ansprüche, bei der das Formgedächtniselement (5, 12) drahtförmig ausgebildet ist und/oder einen elektrisch leitfähigen Draht (5.1) aus einer Formgedächtnislegierung aufweist, insbesondere als eine Feder aus einem elektrisch leitfähigen Draht (5.1) aus einer Formgedächtnislegierung ausgebildet ist, besonders bevorzugt eine Spiralfeder oder eine Schraubenfeder.

10. Tasche (1) nach Einem der Ansprüche 6 bis 8, bei der sich die Sperrklinke (9) über eine von zwei gegenüberliegenden Stirnseiten einer der beiden Taschenbodenhälften (2.1, 2.2) aus der Taschenbodenhälfte (2.1, 2.2) heraus erstreckt, wenn der Verriegelungsmechanismus (3) die Schließposition einnimmt, wobei sich vorzugsweise das Formgedächtniselement (5, 12), insbesondere ein elektrisch leitfähiger Draht (5.1) aus einer Formgedächtnislegierung, zumindest abschnittsweise und vorzugsweise über seine gesamte Länge unter einem Winkel, vorzugsweise senkrecht, zu der Stirnseite erstreckt.

11. Tasche (1) nach einem der vorangegangenen Ansprüche, bei der die beiden Taschenbodenhälften (2.1, 2.2) plattenförmig ausgebildet sind, wobei sich das Formgedächtniselement (5, 12), insbesondere ein elektrisch leitfähiger Draht (5.1) aus einer Formgedächtnislegierungen, im Innern und zumindest abschnittsweise, vorzugsweise über seine gesamte Länge, parallel zu einer der beiden Taschenbodenhälften (2.1, 2.2) erstreckt.

12. Tasche (1) nach Anspruch 10, bei der das Formgedächtniselement (5, 12), insbesondere ein elektrisch leitfähiger Draht (5.1) aus einer Formgedächtnislegierung, freiliegend im Innern eines Hohlraums (10) der Taschenbodenhälfte (2.1) angeordnet ist, wobei der Hohlraum (10) an einer Verbindungsseite (11), über welche die Taschenbodenhälfte (2.1) an der anderen Taschenbodenhälfte (2.2) anliegt, wenn die Taschenbodenhälften (2.1, 2.2) miteinander verbunden sind, offen ist, wenn die Taschenbodenhälften (2.1, 2.2) voneinander gelöst sind.

13. Taschensorter mit einer Vielzahl Taschen (1) nach einem der vorangegangenen Ansprüche, wobei der Taschensorter einen Hängeförderer (100) mit einer Vielzahl Mitnehmer (300) aufweist, die entlang einer Förderschiene (101) des Hängeförderers (100) gefördert sind und in die jeweils eine der Vielzahl Taschen (1) eingehängt ist.

14. Verfahren für die automatische Taschenentladung in einem Taschensorter, wobei das Verfahren die Schritte aufweist:
a. Fördern mindestens einer Tasche (1), vorzugsweise einer Mehrzahl Taschen (1), besonders bevorzugt eines Batch aus einer bestimmten Anzahl von Taschen, entlang einer Förderstrecke (101) eines Taschensorters, wobei die Tasche (1) nach einem der Ansprüche 1 bis 9 ausgebildet ist;
b. Zuführen der Tasche (1) einer Taschenentladung (104) des Taschensorters entlang der Förderstrecke (101), wobei der Verriegelungsmechanismus (3) an der Taschenentladung (104) angesteuert wird, die Freigabeposition einzunehmen, indem das Formgedächtniselement (5, 12) von der Taschenentladung (104) über die Stromversorgung (7) mit einem elektrischen Strom beaufschlagt wird.

15. Verfahren nach Anspruch 10, bei dem das Beaufschlagen das Erwärmen des Formgedächtniselements (5, 12) aufweist, wobei sich eine Länge des Formgedächtniselements (5, 12), vorzugsweise eine Drahtlänge eines elektrisch leitfähigen Drahts (5.1) aus einer Formgedächtnislegierung, verkürzt oder verlängert.

16. Verfahren nach Anspruch 11 oder 12, wobei das Ansteuern das Herstellen eines elektrischen Kontakts zwischen einer Stromquelle (104.1) der Taschenentladung (104), vorzugsweise einer Gleichstromquelle, und der elektrischen Stromversorgung (7) der Tasche (1) aufweist.

17. Verfahren nach Anspruch 13, bei dem das Herstellen eines elektrischen Kontakts das aneinander Vorbeiführen korrespondierender Gleitkontakte (6) an der Tasche (1) und der Taschenentladung (104) aufweist, wobei der elektrische Kontakt für eine Kontaktzeit, während der die aneinander vorbeigeführten korrespondierenden Gleitkontakte (6) elektrisch leitend in Verbindung stehen, hergestellt wird.

18. Verfahren nach einem der vorangegangen Ansprüche 11 bis 14, bei dem die Tasche (1) mit einer kontinuierlichen Bewegung, vorzugsweise mit einer gleichförmigen Bewegung, durch die Taschenentladung (104) hindurch transportiert wird, besonders bevorzugt mit derselben Fördergeschwindigkeit, mit welcher die Tasche (1) entlang einer stromaufwärtigen und einer stromabwärtigen Förderstrecke (101) der Taschenentladung (104) gefördert wird.

19. Verfahren nach einem der Ansprüche 11 bis 15, bei dem die beiden Taschenbodenhälften (2.1, 2.2), nachdem der Verriegelungsmechanismus in der Taschenentladung (104) die Freigabeposition eingenommen hat, voneinander getrennt werden, wobei das Formgedächtniselement (5, 12) zur Umgebung freigelegt wird.

20. Verfahren nach Anspruch 16, bei dem die Tasche (1) durch das Trennen der Taschenbodenhälften (2.1, 2.2) entleert und die entleerte Tasche (1) entlang der Förderstrecke (101) aus der Taschenentladung (104) herausgeführt wird, wobei die Strombeaufschlagung des Formgedächtniselements (5, 12) unterbrochen wird, sodass das Formgedächtniselement (5, 12) relaxiert, insbesondere sich wieder verlängert, und der Verriegelungsmechanismus (3) in die Schließposition überführt wird.

## Claims

1. Bag (1) for a bag sorter, the bag (1) comprising a divisible bag bottom (2) which has two bag bottom halves (2.1, 2.2) interconnected via a locking mechanism (3) and detachable from one another in a release position of the locking mechanism (3), the locking mechanism (3) being adjustable back and forth between a closed position and the release position, **characterized in that** the locking mechanism (3) comprises a shape memory element (5, 12) which can be supplied with an electric current via an electric power supply (7) of the bag (1).

2. Bag (1) according to claim 1, in which the locking mechanism (3) comprises a spring element (5, 12) by means of which the locking mechanism (3) is biased into the closed position, wherein the shape memory element (5, 12) is designed, depending on the current supplied thereto, to move the locking mechanism (3) into the release position counter to a bias of the spring element (5, 12).

3. Bag (1) according to claim 1 or 2, which comprises at least one electrical contact (6), preferably at least one sliding contact, for connecting a current source, preferably a direct current source, to the electrical power supply (7).

4. Bag (1) according to claim 3, in which the power supply (7) comprises at least one electrical conductor, such as an electrical cable, by means of which the shape memory element (5, 12) is connected to the at least one electrical contact (6).

5. Bag (1) according to one of the preceding claims, in which the electrical power supply (7) comprises at least one receiver of a wireless, preferably an inductive, energy transfer, from which receiver the power supply (7) is supplied with electrical energy.

6. Bag (1) according to one of the preceding claims, in which the locking mechanism (3) comprises a pawl (9) on each opposite side of one of the bag bottom halves (2.1, 2.2), preferably on each opposite end face, on which pawl the shape memory element (5, 12) is arranged, or for the two pawls (9) separate shape memory elements (5, 12) of the locking mechanism (3) are arranged.

7. Bag (1) according to one of the preceding claims, in which the locking mechanism (3) comprises at least one lever (8) which is pivotable about an axis of rotation (x) and on which the shape memory element (5, 12) and a pawl (9) are arranged at a distance from one another in the longitudinal direction of the lever (8).

8. Bag (1) according to claim 7, in which the locking mechanism (3) comprises, on each opposite side of one of the bag bottom halves (2.1, 2.2), preferably on each opposite end face, a lever (8) which is pivotable about an axis of rotation (x) and on which the shape memory element (5, 12), or for the two levers (8) separate shape memory elements (5, 12) of the locking mechanism (3), and a pawl (9) are arranged at a distance from one another in the radial direction with respect to the axis of rotation (x).

9. Bag (1) according to one of the preceding claims, in which the shape memory element (5, 12) is wire-like and/or comprises an electrically conductive wire (5.1) made of a shape memory alloy, in particular is in the form of a spring made of an electrically conductive wire (5.1) made of a shape memory alloy, particularly preferably a spiral spring or a helical spring.

10. Bag (1) according to one of claims 6 to 8, in which the pawl (9) extends out of the bag bottom half (2.1, 2.2) over one of two opposite end faces of one of the two bag bottom halves (2.1, 2.2) when the locking mechanism (3) assumes the closed position, wherein the shape memory element (5, 12), in particular an electrically conductive wire (5.1) made of a shape memory alloy, preferably extends at least in portions and preferably over its entire length at an angle, preferably perpendicularly, with respect to the end face.

11. Bag (1) according to one of the preceding claims, in which the two bag bottom halves (2.1, 2.2) are plate-like, wherein the shape memory element (5, 12), in particular an electrically conductive wire (5.1) made of a shape memory alloy, extends in the interior and at least in portions, preferably over its entire length, in parallel with one of the two bag bottom halves (2.1, 2.2).

12. Bag (1) according to claim 10, in which the shape memory element (5, 12), in particular an electrically conductive wire (5.1) made of a shape memory alloy, is arranged exposed in the interior of a cavity (10) of the bag bottom half (2.1), wherein, when the bag bottom halves (2.1, 2.2) are detached from one another, the cavity (10) is open at a connecting side (11), via which the bag bottom half (2.1) rests against the other bag bottom half (2.2) when the bag bottom halves (2.1, 2.2) are interconnected.

13. Bag sorter comprising a plurality of bags (1) according to one of the preceding claims, wherein the bag sorter comprises an overhead conveyor (100) having a plurality of carriers (300) which are conveyed along a conveyor rail (101) of the overhead conveyor (100) and into each of which one of the plurality of bags (1) is hooked.

14. Method for automatic bag unloading in a bag sorter, wherein the method comprises the steps of:
a. conveying at least one bag (1), preferably a plurality of bags (1), particularly preferably a batch of a certain number of bags, along a conveyor section (101) of a bag sorter, wherein the bag (1) is designed according to one of claims 1 to 9;
b. feeding the bag (1) to a bag unloader (104) of the bag sorter along the conveyor section (101), wherein the locking mechanism (3) is actuated at the bag unloader (104) to assume the release position by the shape memory element (5, 12) being supplied with an electric current from the bag unloader (104) via the power supply (7).

15. Method according to claim 10, in which the supplying process comprises heating the shape memory element (5, 12), wherein a length of the shape memory element (5, 12), preferably a wire length of an electrically conductive wire (5.1) made of a shape memory alloy, is shortened or lengthened.

16. Method according to claim 11 or 12, wherein the actuation comprises establishing an electrical contact between a current source (104.1) of the bag unloader (104), preferably a direct current source, and the electrical power supply (7) of the bag (1).

17. Method according to claim 13, in which the establishment of an electrical contact comprises the guiding of corresponding sliding contacts (6) on the bag (1) and the bag unloader (104) past one another, wherein the electrical contact is established for a contact time during which the corresponding sliding contacts (6) that are guided past one another are electrically conductively connected.

18. Method according to one of the preceding claims 11 to 14, in which the bag (1) is transported through the bag unloader (104) with a continuous movement, preferably with a uniform movement, particularly preferably at the same conveying speed at which the bag (1) is conveyed along an upstream and a downstream conveyor section (101) of the bag unloader (104).

19. Method according to one of claims 11 to 15, in which the two bag bottom halves (2.1, 2.2) are separated from one another after the locking mechanism in the bag unloader (104) has assumed the release position, wherein the shape memory element (5, 12) is exposed to the environment.

20. Method according to claim 16, in which the bag (1) is emptied by separating the bag bottom halves (2.1, 2.2) and the emptied bag (1) is guided out of the bag unloader (104) along the conveyor section (101), wherein the supply of current to the shape memory element (5, 12) is interrupted so that the shape memory element (5, 12) relaxes, in particular lengthens again, and the locking mechanism (3) is moved into the closed position.

## Revendications

1. Sac (1) pour un trieur de sacs, dans lequel le sac (1) présente un fond de sac divisible (2) comportant deux moitiés de fond de sac (2.1, 2.2) qui sont reliées l'une à l'autre par l'intermédiaire d'un mécanisme de verrouillage (3) et qui peuvent être détachées l'une de l'autre dans une position de libération du mécanisme de verrouillage (3), dans lequel le mécanisme de verrouillage (3) peut être déplacé en va-et-vient entre une position de fermeture et la position de libération, **caractérisé en ce que** le mécanisme de verrouillage (3) présente un élément à mémoire de forme (5, 12) pouvant être alimenté en courant électrique par l'intermédiaire d'une alimentation électrique (7) du sac (1).

2. Sac (1) selon la revendication 1, dans lequel le mécanisme de verrouillage (3) présente un élément à ressort (5, 12) avec lequel le mécanisme de verrouillage (3) est précontraint dans la position de fermeture, dans lequel l'élément à mémoire de forme (5, 12) est conçu pour, en fonction de son alimentation en courant, faire passer le mécanisme de verrouillage (3) dans la position de libération à l'encontre d'une précontrainte de l'élément à ressort (5, 12).

3. Sac (1) selon la revendication 1 ou 2, qui présente au moins un contact électrique (6), de préférence au moins un contact de glissement, pour le raccordement d'une source de courant, de préférence une source de courant continu, à l'alimentation électrique (7).

4. Sac (1) selon la revendication 3, dans lequel l'alimentation électrique (7) présente au moins un conducteur électrique, tel qu'un câble électrique, à l'aide duquel l'élément à mémoire de forme (5, 12) est raccordé à l'au moins un contact électrique (6).

5. Sac (1) selon l'une des revendications précédentes, dans lequel l'alimentation électrique (7) présente au moins un récepteur d'une transmission d'énergie sans fil, de préférence inductive, récepteur à partir duquel l'alimentation électrique (7) est alimentée en énergie électrique.

6. Sac (1) selon l'une des revendications précédentes, dans lequel le mécanisme de verrouillage (3) présente, sur des faces opposées de l'une des moitiés de fond de sac (2.1, 2.2), de préférence sur des faces frontales opposées, respectivement un cliquet d'arrêt (9) sur lequel est disposé l'élément à mémoire de forme (5, 12), ou sont disposés des éléments à mémoire de forme (5, 12) du mécanisme de verrouillage (3), lesquels éléments à mémoire de forme sont séparés pour les deux cliquets d'arrêt (9).

7. Sac (1) selon l'une des revendications précédentes, dans lequel le mécanisme de verrouillage (3) présente au moins un levier (8) pouvant pivoter autour d'un axe de rotation (x), levier sur lequel sont disposés, à distance l'un de l'autre dans la direction longitudinale du levier (8), l'élément à mémoire de forme (5, 12) et un cliquet d'arrêt (9).

8. Sac (1) selon la revendication 7, dans lequel le mécanisme de verrouillage (3) présente, sur des faces opposées de l'une des moitiés de fond de sac (2.1, 2.2), de préférence sur des faces frontales opposées, respectivement un levier (8) pouvant pivoter autour d'un axe de rotation (x), levier sur lequel est disposé, à distance l'un de l'autre dans la direction radiale par rapport à l'axe de rotation (x), l'élément à mémoire de forme (5, 12), ou sont disposés des éléments à mémoire de forme (5, 12) du mécanisme de verrouillage (3), lesquels éléments à mémoire de forme sont séparés pour les deux leviers (8), et un cliquet d'arrêt (9).

9. Sac (1) selon l'une des revendications précédentes, dans laquelle l'élément à mémoire de forme (5, 12) est réalisé sous forme de fil et/ou présente un fil électriquement conducteur (5.1) constitué d'un alliage à mémoire de forme, en particulier est réalisé sous forme de ressort constitué d'un fil électriquement conducteur (5.1) en un alliage à mémoire de forme, de préférence un ressort spiral ou un ressort hélicoïdal.

10. Sac (1) selon l'une des revendications 6 à 8, dans lequel le cliquet d'arrêt (9) s'étend hors de la moitié de fond de sac (2.1, 2.2) par l'une des deux faces frontales opposées de l'une des deux moitiés de fond de sac (2.1, 2.2) lorsque le mécanisme de verrouillage (3) adopte la position de fermeture, dans lequel l'élément à mémoire de forme (5, 12), en particulier un fil électriquement conducteur (5.1) constitué d'un alliage à mémoire de forme, s'étend au moins dans certaines sections et de préférence sur toute sa longueur suivant un angle, de préférence perpendiculaire, par rapport à la face frontale.

11. Sac (1) selon l'une des revendications précédentes, dans lequel les deux moitiés de fond de sac (2.1, 2.2) sont réalisés en forme de plaque, dans lequel l'élément à mémoire de forme (5, 12), en particulier un fil électriquement conducteur (5.1) constitué d'un alliage à mémoire de forme, s'étend à l'intérieur et au moins dans certaines sections, de préférence sur toute sa longueur, parallèlement à l'une des deux moitiés de fond de sac (2.1, 2.2).

12. Sac (1) selon la revendication 10, dans lequel l'élément à mémoire de forme (5, 12), en particulier un fil électriquement conducteur (5.1) constitué d'un alliage à mémoire de forme, est disposé librement à l'intérieur d'un espace creux (10) de la moitié de fond de sac (2.1), dans lequel l'espace creux (10) est ouvert sur une face de liaison (11) par l'intermédiaire de laquelle la moitié de fond de sac (2.1) est en appui sur l'autre moitié de fond de sac (2.2) lorsque les moitiés de fond de sac (2.1, 2.2) sont reliées entre elles, lorsque les moitiés de fond de sac (2.1, 2.2) sont détachées l'une de l'autre.

13. Trieur de sacs comportant une pluralité de sacs (1) selon l'une des revendications précédentes, dans lequel le trieur de sacs présente un convoyeur suspendu (100) comportant une pluralité d'entraîneurs (300) transportés le long d'un rail de transport (101) du convoyeur suspendu (100) et dans chacun desquels est accrochée l'une de la pluralité de sacs (1).

14. Procédé pour le déchargement automatique de sacs dans un trieur de sacs, dans lequel le procédé présente les étapes consistant à :
a. transporter au moins un sac (1), de préférence une pluralité de sacs (1), de manière particulièrement préférée un lot constitué d'un nombre déterminé de sacs, le long d'un trajet de transport (101) d'un trieur de sacs, dans lequel le sac (1) est réalisé selon l'une des revendications 1 à 9 ;
b. amener le sac (1) à une décharge de sacs (104) du trieur de sacs le long du trajet de transport (101), dans lequel le mécanisme de verrouillage (3) sur la décharge de sacs (104) est commandé pour adopter la position de libération par l'application d'un courant électrique à l'élément à mémoire de forme (5, 12) de la décharge de sacs (104) par l'intermédiaire de l'alimentation électrique (7).

15. Procédé selon la revendication 10, dans lequel l'application présente le chauffage de l'élément à mémoire de forme (5, 12), dans lequel une longueur de l'élément à mémoire de forme (5, 12), de préférence une longueur de fil d'un fil électriquement conducteur (5.1) constitué d'un alliage à mémoire de forme, est raccourcie ou allongée.

16. Procédé selon la revendication 11 ou 12, dans lequel la commande présente l'établissement d'un contact électrique entre une source de courant (104.1) de la décharge de sacs (104), de préférence une source de courant continu, et l'alimentation électrique (7) du sac (1).

17. Procédé selon la revendication 13, dans lequel l'établissement d'un contact électrique présente le passage de contacts de glissement (6) correspondants l'un devant l'autre sur le sac (1) et la décharge de sacs (104), dans lequel le contact électrique est établi pendant un temps de contact pendant lequel les contacts de glissement (6) correspondants passés l'un devant l'autre sont en contact électriquement conducteur.

18. Procédé selon l'une des revendications 11 à 14 précédentes, dans lequel le sac (1) est transporté avec un mouvement continu, de préférence avec un mouvement uniforme, à travers la décharge de sacs (104), de manière particulièrement préférée à la même vitesse de transport que celle à laquelle le sac (1) est transporté le long d'un trajet de transport amont et d'un trajet de transport aval (101) de la décharge de sacs (104).

19. Procédé selon l'une des revendications 11 à 15, dans lequel les deux moitiés de fond de sac (2.1, 2.2) sont séparées l'une de l'autre après que le mécanisme de verrouillage a adopté la position de libération dans la décharge de sacs (104), dans lequel l'élément à mémoire de forme (5, 12) est exposé à l'environnement.

20. Procédé selon la revendication 16, dans lequel le sac (1) est vidé par la séparation des moitiés de fond de sac (2.1, 2.2) et le sac (1) vidé est guidé le long du trajet de transport (101) hors de la décharge de sacs (104), dans lequel l'alimentation en courant de l'élément à mémoire de forme (5, 12) est interrompue de sorte que l'élément à mémoire de forme (5, 12) se détend, en particulier s'allonge à nouveau, et le mécanisme de verrouillage (3) est mis dans la position de fermeture.
